# EUROPEAN PATENT SPECIFICATION

(11) **EP 1 231 838 B1**
(45) Date of publication and mention of the grant of the patent: **02.12.2009**
(21) Application number: 00992479.6
(22) Date of filing: 25.10.2000
(51) Int. Cl.: A01N 37/12

(54) **FRUIT, VEGETABLE, AND SEED DISINFECTANTS**
DESINFEKTIONSMITTEL FÜR FRÜCHTE, GEMÜSE UND SAMEN
DESINFECTANTS POUR GRAINES, FRUITS ET LEGUMES

(30) Priority: 24.11.1999 US 167250 P
(43) Date of publication of application: 21.08.2002
(60) Divisional application: 09173719.7
(73) Proprietor: 3M Innovative Properties Company, St. Paul MN 55133-3427 (US)
(72) Inventor: TAUTVYDAS, Kestutis, Lake Elmo, MN 55042 (US); ANDREWS, Jeffrey, F., Stillwater, MN 55082 (US)
(74) Representative: Meyers, Hans-Wilhelm
(86) International application number: PCT/US2000/041509
(87) International publication number: WO 2001/043549

(56) References cited:
- EP-A- 0 131 393
- WO-A-92/21320
- WO-A-95/07616
- WO-A-99/44444
- US-A- 4 002 775
- US-A- 5 569 461
- PATENT ABSTRACTS OF JAPAN vol. 016, no. 168 (C-0932), 22 April 1992 (1992-04-22) & JP 04 016173 A (NIPPON OIL & FATS CO LTD), 21 January 1992 (1992-01-21)
- DATABASE WPI Section Ch, Week 199927 Derwent Publications Ltd., London, GB; Class A23, AN 1999-321014 XP002191633 & JP 11 113780 A (ASAHI KASEI KOGYO KK), 27 April 1999 (1999-04-27)

## Description

### TECHNICAL FIELD

The invention relates to methods for inhibiting microbial growth on plants or plant parts.

### BACKGROUND

Food borne diseases cause an estimated 76 million illnesses and 5,000 deaths each year in the United States, with direct and indirect medical costs estimated to be $1 billion yearly. Mead et al. Emerg. Infect. Dis., 5(5):607-625 (1999). Common food pathogens include *Salmonella, Listeria monocytogenes, Escherichia coli, Cainpylobacter jejuni, Bacillus cereus,* and Norwalk-like viruses. Outbreaks of food borne diseases typically have been associated with contaminated meat products, raw milk, or poultry products such as eggs. A variety of materials and methods have been used to control bacterial contamination. For example, WO 95/07616 is related to a product and a process to reduce the microbial contamination of processed meat using a disinfectant composition containing a fatty acid monoester, an acid or chelating agent, and a food grade surfactant. There is an emerging awareness, however, that fruits and vegetables also are sources of food borne diseases. For example, outbreaks of enterohemorrhagic *E. coli* strains such as O157:H7 have been linked with consumption of unpasteurized apple juice and sprouts. Thus, a need exists for methods for reducing or eliminating pathogens from the surfaces of fruits, vegetables, and seeds, and for extending the shelf life of fruits, vegetables, and seeds.

### SUMMARY

The invention is based on antimicrobial formulations containing a fatty acid monoester, an enhancer, and one or more surfactants, that are useful for reducing levels of microorganisms on food products. For example, when producing sprouts or making fresh, non-pasteurized orange juice, it may be necessary to achieve a 5-log reduction of inoculated pathogenic bacteria on the sprout seed or orange surface to comply with regulatory requirements or the sprouts or juice will have to be labeled with a warning that eating those products may cause ill health. Using the formulations and methods disclosed herein, however, a 5-log reduction of pathogenic bacteria can be achieved on food products. Moreover, components of the antimicrobial formulations already have multiple food additive listed uses or are generally recognized as safe (GRAS), thereby minimizing any concerns about safety. Preferred formulations of the invention are not inactivated by organic matter, and can be reapplied to the surfaces of plants and plant parts.

In one aspect, the invention features an antimicrobial formulation that includes a fatty acid monoester, an enhancer, two or more anionic surfactants, (e.g., two anionic surfactants) and a vehicle. The fatty acid monoester can be glycerol monolaurate, glycerol monocaprylate, glycerol monocaprate, propylene glycol monolaurate, propylene glycol monocaprylate, propylene glycol monocaprate, or combinations thereof. The enhancer can be a chelating agent such as EDTA or salts thereof; an acid such as an organic acid (e.g., lactic, mandelic, succinic, tartaric, ascorbic, salicylic, benzoic, acetic, malic, or adipic acid); or an alcohol such as ethanol or isopropanol. The two or more anionic surfactants can be selected from the group consisting of acyl lactylate salts, dioctyl sulfosuccinate salts, lauryl sulfate salts, dodecylbenzene sulfonate salts, and salts of C8-C 18 fatty acids. The vehicle can be water, propylene glycol, polyethylene glycol, glycerin, ethanol, isopropanol, or combinations thereof. The formulation further can include a flavorant.

The invention also features a method for reducing microbial levels on plants or plant parts. The method includes contacting a plant or plant part with an effective amount of an antimicrobial formulation that includes a fatty acid monoester, an enhancer, two or more anionic surfactants, and a vehicle.

In another aspect, the invention features a ready-to-use antimicrobial formulation that includes a fatty acid monoester; an enhancer; a surfactant; and a vehicle, wherein the concentration of the fatty acid monoester includes from about 0.2 wt% to about 2.0 wt% of the ready-to-use formulation and the enhancer includes from about 1.1 wt% to about 25 wt% of the ready-to-use formulation (e.g., 1.1 to 15 wt% or 1.1 to 2.1 wt%). The formulation further can include a flavorant. Methods for reducing microbial levels on plants or plant parts also are described that includes contacting a plant or plant part with an effective amount of such a ready-to-use antimicrobial formulation. Articles of manufacture also are featured that include packaging material and an antimicrobial formulation within the packaging material, wherein the packaging material contains a label indicating that the formulation is ready to be applied to plants or plant parts to reduce levels of microbes.

In yet another aspect, the invention features a kit that includes a first container having a fatty acid monoester composition and a second container having an enhancer. The fatty acid monoester composition includes a fatty acid monoester, a surfactant, and a vehicle, and in some embodiments, two or more anionic surfactants. The fatty acid monoester can be glycerol monolaurate, glycerol monocaprylate, glycerol monocaprate, propylene glycol monolaurate, propylene glycol monocaprylate, propylene glycol monocaprate, or combinations thereof. A particularly useful enhancer is lactic acid; a particularly useful vehicle is propylene glycol, while a useful fatty acid monoester is propylene glycol monocaprylate.

The kit further can include a label or package insert indicating that contents of the first container and the second container are mixed to produce an antimicrobial formulation that is effective for reducing levels of microbes on plants and plant parts. The label or package insert further can indicate that the antimicrobial formulation is diluted before applying to plants or plant parts.

The invention also features a plant or plant part that includes an antimicrobial formulation, wherein the antimicrobial formulation includes a fatty acid monoester, an enhancer, a surfactant, and a vehicle. The formulation further can include a flavorant and/or a food grade coating. The antimicrobial formulation can be interposed between the plant or plant part and food grade coating. The antimicrobial formulation also can be intermixed with the food grade coating.

Unless otherwise defined, all technical and scientific terms used herein have the same meanings as commonly understood by one of ordinary skill in the art to which this invention belongs. Although methods and materials similar or equivalent to those described herein can be used to practice the invention, suitable methods and materials are described below. In case of conflict, the present specification, including definitions, will control. In addition, the materials, methods, and examples are illustrative only and not intended to be limiting.

Other features and advantages of the invention will be apparent from the following detailed description, and from the claims.

### DETAILED DESCRIPTION

The invention relates to formulations that are useful for reducing levels of microbes on plants and plant parts (e.g. seeds, vegetables, and fruits). Suitable plants and plant parts include raw agricultural commodities (i.e., non-processed products) and processed products. Non-limiting examples of raw agricultural commodities include alfalfa seeds, sprouts, cucumbers, melons, onions, lettuce, cabbage, carrots, potatoes, eggplants, citrus fruits such as grapefruits, lemons, limes, and oranges, bananas, pineapples, kiwis, and apples. Processed products include torn, sliced, chopped, shredded, or minced fruits or vegetables, as well as juice obtained from fruits or vegetables.

Antimicrobial formulations of the invention include one or more fatty acid monoesters, one or more surfactants, and one or more enhancers, and can be used for reducing levels of microorganisms, including Gram-negative and Gram-positive bacteria, viruses, and fungi on plants and plant parts. As used herein, "reducing levels of microorganisms" includes inhibiting microbial growth, promoting microbial death, and removing microorganisms from the surfaces of plants or plant parts. The formulations of the invention are particularly useful for reducing levels of food borne human pathogens, including *Escherichia coli, Salmonella* serotypes, including *S.* Typhimurium, *Listeria* (e.g., *L. monocytogenes), Campylobacter* (e.g., *C. jejuni), Shigella,* and *Bacillus cereus.* Levels of plant pathogens also can be reduced on the surfaces of plants and plant parts, which can extend shelf life of the plants and plant parts. Non-limiting examples of plant pathogens include *Erwinia carotovora, Fusarium* species, *Botrytis* species, *Phytopthera* species, *Phoma* species, *Verticilium* species, and *Colletotrichum* species. The formulations of the invention also are effective at reducing viability of spores on surfaces of plants and plant parts, such as spores from *Bacillus subtilis.*

### Antimicrobial Formulations

Fatty acid monoesters suitable for use in the antimicrobial formulations generally are considered food grade, GRAS, and/or are U.S. Food and Drug Administration (FDA)-cleared food additives. In particular, one or more fatty acid monoesters derived from C₈ to C₁₂ fatty acids such as glycerol monoesters of caprylic, capric, or lauric acid and/or propylene glycol monoesters of caprylic, capric, or lauric acid are useful in formulations of the invention. Combinations of fatty acid monoesters can be tailored to the target microorganism. For example, laurate monoesters can be combined with caprylate monoesters and/or caprate monoesters when it is desired to reduce levels of fungi on the surface of a plant or plant part.

Monoglycerides useful in the invention typically are available in the form of mixtures of unreacted glycerol, monoglycerides, diglycerides, and triglycerides. Thus, it is preferred to use materials that contain a high concentration (e.g., greater than about 85 wt. %, preferably about 90 wt. %) of monoglyceride. Examples of particularly useful commercially available materials include glycerol monolaurate (GML), available from Med-Chem Laboratories, East Lansing, MI, under the tradename LAURICIDIN™, glycerol monocaprylate (GM-C8) and glycerol monocaprate (GM-C 10) available from Riken Vitamin Ltd., Tokyo, Japan under the tradenames POEM™ M-100 and POEM™ M-200, respectively, and those available from the Henkel Corp. of Germany under the tradename "MONOMULS™" 90 L-12". Propylene glycol monocaprylate (PG-C8), propylene glycol monocaprate (PG-C10), and propylene glycol monolaurate (PG-C12) are available from Uniquema International, Chicago, IL.

Suitable enhancers are organic acids, chelating agents, and alcohols. Preferably, the enhancers are food grade, GRAS listed, and/or FDA-cleared food additives. Organic acids can include, for example, lactic acid, tartaric acid, adipic acid, succinic acid, citric acid, ascorbic acid, malic acid, mandelic acid, acetic acid, sorbic acid, benzoic acid, and salicylic acid. Chelating agents can include, for example, ethylenediaminetetraacetic acid (EDTA) and salts thereof. Lactic acid and mandelic acid are particularly useful enhancers. Alcohols can be, for example, ethanol, isopropanol, or long chain alcohols such as octanol or decyl alcohol.

Antimicrobial formulations also can include one or more surfactants, which can facilitate dissolving or dispersing of the monoesters in water when concentrates are diluted and/or help to loosen or remove attached microorganisms from produce and seed surfaces so that the microorganisms can be more readily contacted and destroyed by the formulations. For example, an antimicrobial formulation can include two or more anionic surfactants such as acyl lactylate salts, dioctyl sulfosuccinate salts, lauryl sulfate salts, dodecylbenzene sulfonate salts, and salts of C8-C18 fatty acids. Suitable salts include sodium, potassium, or ammonium salts. Acyl lactylates include, for example, calcium or sodium stearoyl-2-lactylate, sodium isostearoyl-2-lactylate, sodium lauroyl-2-lactylate, sodium caproyl lactylate, sodium cocoyl lactylate, and sodium behenoyl lactylate. Nonionic surfactants include glycerol esters such as decaglyceryl tetraoleate; sorbitan esters such as sorbitan monolaurate, commercially available as SPAN™ 20 from Uniquema International, Chicago, IL; and block copolymers of polyalkylene oxide, e.g., polyethylene oxide and polypropylene oxide available as Pluronics™ and Tetronics™ from BASF (Parsippany, NJ). Dioctyl sodium sulfosuccinate is commercially available as GEMTEX™ SC40 surfactant (40% dioctyl sodium sulfosuccinate in isopropanol) from Finetex Inc., Spencer, North Carolina. Sodium caproyl lactylate is commercially available as PATIONIC™ 122A from RITA (Woodstock, IL). Sodium lauryl sulfate is commercially available from Stepan Chemical Co., Northfield, IL.

The formulations of the invention can be in a non-aqueous or aqueous solution or suspension. Suitable vehicles for preparing the solutions or suspensions are safe and acceptable to regulatory agencies such as the FDA and the U.S. Environmental Protection Agency (EPA). Particularly acceptable vehicles include water, propylene glycol, polyethylene glycol, glycerin, ethanol, isopropanol, and combinations thereof. Formulation of the propylene glycol monoesters of fatty acids in propylene glycol or formulation of glycerol monoesters of fatty acids in glycerin can minimize the potential for transesterification between vehicle and ester. Adding glycerol monolaurate to glycerin produces a weak gel instead of a solution, however, gel formation can be prevented by addition of a cosolvent such as ethanol or isopropanol.

The concentration of the aforementioned components required for effectively inhibiting microbial growth depends on the type of microorganism targeted and the formulation used (e.g., the type of enhancer and surfactants that are present). The concentrations or amounts of each of the components, when considered separately, do not kill as great a spectrum of pathogenic or undesired microorganisms or reduce the number of such microorganisms to an acceptable level. Thus, the components of the formulation, when used together, provide a synergistic antimicrobial activity to the plants or plant parts when compared to the same components used alone and under the same conditions.

Effective amounts of each component can be readily ascertained by one of skill in the art using the teachings herein and assays known in the art. Formulations can be prepared as concentrates then diluted prior to use. Typically, the fatty acid monoesters is about 0.001 to 30 weight % (wt%), the enhancer is about 0.001 to 30 and one or more surfactants are 0.001 to 30 wt% of the antimicrobial formulation. When the enhancer is an alcohol such as isopropanol or ethanol, the minimum concentration that maintains synergistic antimicrobial activity is about 15 wt% (e.g. 15-30 wt% for ethanol and 15-20 wt% for isopropanol). For longer chain alcohols such as decyl alcohol, the minimum concentration that maintains synergistic activity is about 1 wt% (e.g. 1-2 wt%), while for 1-octanol, the minimal concentration is about 0.5 wt% (e.g. 0.5-1.0 wt%). For example, a ready-to-use formulation (i.e., a formulation that is applied to plants or plant parts) can include 0.01 to 5.0 wt% of a fatty acid monoester, about 0.5 to 30 wt% of an enhancer, and about 0.5 wt% to 5.0 wt% of a surfactant. In particular, a ready-to-use formulation can include about 0.2 wt% to about 2.0 wt% of the fatty acid monoester, about 1.1 wt% to about 25.0 wt% of the enhancer (e.g., 1.1 to 15.0 wt% or 1.1 to 2.1 wt%), and about 0.1 wt% to about 1.5 wt% of one or more surfactants.

Additional components of the antimicrobial formulations can include, for example, food-grade coating agents such as food-grade waxes, components that protect the formulations from UV inactivation or degradation, colorants, odor- enhancing agents, viscosity control agents such as gum tragacanth, gum accacia, carageenans, Carbopols (B.F. Goodrich, Cleveland, Ohio), guar gum, and cellulose gums, anti-foaming agents such as silicone anti-foams, e.g., polydimethylsiloxanes (Dow Coming, Midland, MI), sticking agents, or flavorants such as natural oils or artificial sweeteners.

### Treating Plants and Plant Parts

Formulations of the invention can be applied to plants and plant parts by, for example, spraying, dipping, wiping, brushing, sponging, or padding. The formulation can be applied to a portion of or over the entire exterior surface of a plant or plant part. Preferably, the entire surface of the plant or plant part is fully wetted with the formulation. Formulations can be applied at temperatures ranging from 2°C to 70°C and are in contact with the surface of the plant or plant part for a time sufficient to reduce microbial levels (e.g. 30 seconds to 20 minutes). Typically, application time is reduced as temperature is increased. Heating the formulation to between 40°C and 65°C (e.g., 44-60°C, 46-58°C, 48-56°C, or 50-54°C) and applying to the surface while still warm is particularly effective for reducing microbial levels on plants or plant parts. The liquid vehicle can be removed from the surface of plant or plant part by, for example, air drying.

For example, a fruit such as an orange can be treated with an antimicrobial formulation of the invention, air-dried, then coated with a food-grade wax. This produces an orange having the antimicrobial formulation interposed between the orange and the food-grade coating. Alternatively, the antimicrobial formulation and a food-grade coating can be inter-mixed prior to application.

Treating plants and plant parts with antimicrobial formulations of the invention does not adversely impact the plants or plant parts. For example, the flavor of treated plants or plant parts is not altered and viability of treated seeds is maintained.

### Articles of Manufacture

Formulations of the invention can be packaged into kits. Fatty acid monoesters can be inherently reactive, especially in the presence of enhancers such as hydroxy-substituted organic acids or chelating agents. For example, the monoesters can hydrolyze in an aqueous medium to the corresponding fatty acid, transesterify with a hydroxy-containing enhancer (e.g., lactic acid), or transesterify with a hydroxy-containing solvent. As a result of these reactions, the antimicrobial activity of the liquid composition may be reduced and shelf life may be shortened to less than one year.

Thus, the formulations can be packaged conveniently in a two-part system (kit) to increase stability. In one example of a two-part system, all components of the formulation, except the enhancer, are present in one container, while the enhancer is present in a separate container. Contents from each container are mixed together and generally diluted before treating the plants or plant parts. In some embodiments, the antimicrobial formulation is packaged in a single container having separate compartments for storing two components, e.g., the enhancer is in one compartment and the fatty acid monoester, one or more surfactants, and vehicle are in a second compartment of the same container. Such two-compartment containers typically employ a breakable or displaceable partition between the two compartments. The partition then can be either broken or displaced to allow mixing. Alternatively, the container is configured such that a portion of the contents from each compartment can be removed, without mixing the entire contents of each compartment. See, for example, U.S. Patent Nos. 5,862,949, 6,045,254 and 6,089,389 for descriptions of two-compartment containers.

Surprisingly, the antimicrobial activity demonstrated by two-part systems of the invention was, at times, significantly greater than the activity of corresponding formulations that had been prepared only a short time (e.g., three days or less) before treatment. In some of the test evaluations, e.g. on alfalfa seeds inoculated with *E. coli* or *Salmonella,* greater than a 6-log reduction of bacteria was achieved.

The invention will be further described in the following examples, which do not limit the scope of the invention described in the claims.

### EXAMPLES

The following examples are offered to aid in understanding of the present invention and are not to be construed as limiting the scope thereof. Unless otherwise indicated, all parts and percentages are by weight.

### GLOSSARY

### Monoesters

**GML:** glycerol monolaurate, available from Med-Chem Laboratories, East Lansing, MI under the tradename "LAURICIDIN™".
**PGMC8:** propylene glycol monocaprylate, available from Uniquema International, Chicago, IL.
**PGMC10:** propylene glycol monocaprate, available from Uniquema International, Chicago, IL.

### Enhancer Materials

**LA:** lactic acid, USP, commercially available from J. T. Baker, Phillipsburg, NJ.
**MA:** mandelic acid, USP, commercially available from Avocado Research Chemicals, Ltd., Heysham, UK.

### Surfactants

**PAT 122A:** PATIONIC™ 122A anionic surfactant (sodium caproyl lactylate), commercially available from RITA, Woodstock, IL.
**NaLSO₄:** sodium lauryl sulfate, an anionic surfactant commercially available from Stepan Chemical Co., Northfield, IL.
**DOSS:** dioctyl sodium sulfosuccinate (50 % by weight in ethanol), an anionic surfactant commercially available from American Cyanamid, Wayne, NJ.
**GEM SC40:** GEMTEX™ SC40 anionic surfactant (40 % by weight dioctyl sodium sulfosuccinate in isopropanol), commercially available from Finetex Inc., Spencer, NC.
**SPAN 20:** SPAN™ nonionic surfactant (sorbitan monolaurate), commercially available from Uniquema International, Chicago, IL.
**PLUR P-65:** PLURONIC™ P-65 nonionic surfactant commercially available from BASF, Parsippany, NJ.

### Vehicle/Solvent

**PG:** propylene glycol, commercially available from J. T. Baker, Phillipsburg, NJ.

### TEST METHODS

**Alfalfa Seeds/Inoculation Method:** Sample formulations were evaluated as antibacterial agents on inoculated alfalfa seeds according to the following test method. Bacteria culture preparation. Trypticase Soy Broth (TSB) (Difco Laboratories, VWR Scientific) medium (5 ml) was inoculated with a designated bacterial colony (e.g., *E. coli* or *Salmonella* ser. Typhimurium) picked from an agar plate and incubated at 35°C for 16-18 hours. From the resulting first cell culture, a 10-microliter loopfull was then inoculated into 5 ml of TSB medium and incubated at 35°C for 16-18 hours. From the resulting second cell culture, 0.5 ml was then inoculated into 150 ml of TSB medium and incubated at 35°C for 16-18 hours to provide a bacterial culture that contained about 10⁹ colony forming units (CFU)/ml. Typically, a mixture of four bacterial strains was used. Each strain was grown up separately as described and the resulting cultures (150 ml each) were combined just prior to inoculating the seeds to obtain 600 ml of the mixed strains (cocktail). When a single strain or serotype (ser.) was used, as in the case of *Salmonella* ser. Typhimurium, then 600 ml of the bacterial culture was grown up for use in inoculating the seeds.

Alfalfa seeds inoculation. Typically, the bacterial culture was cooled to ambient temperature and poured into a 2-L beaker in a laminar flow hood. Alfalfa seeds (750 g) were added and stirred rapidly for one minute with a plastic spatula to ensure that all seeds were completely wet. The seeds were poured onto three racks made of hardware cloth (0.6-cm holes) that were covered with a double layer of cheesecloth. A pan was placed underneath each screen to catch runoff. The seeds were spread into a thin layer over the cheesecloth and dried for 48 hours. On the first day, the seeds were stirred every two hours until the seeds and cheesecloth appeared dry. On the second day, the seeds were loosened from the cheesecloth and redistributed. After 48 hours of drying, the seeds were transferred to a sealable plastic bag and stored at 5°C in a refrigerator for at least four days before using.

Evaluation of sample formulation. A 10-g aliquot of bacteria-inoculated alfalfa seeds was placed into a 400-ml beaker and 10 ml of a sample formulation was added. Typically, a sample formulation consisted of 1 part formulated concentrate plus 15 parts water and was warmed to a designated temperature (typically 50°C) before adding to the seeds. The seeds were soaked for a designated time (generally 10-15 minutes) at the designated temperature on a rotary shaker water bath at 100 rpm. The liquid was then decanted and the seeds collected onto a wire mesh sieve with excess liquid blotted away with a paper towel. The seeds were transferred to an 80-ml stomacher bag and 20 ml of letheen broth (Difco Laboratories, VWR Scientific) was added. The pH was adjusted to 7.5 with 1N NaOH. The stomacher bag was placed into a Stomacher 80 (Seward Lab System, VWR Scientific) and processed at the Normal speed setting for 60 seconds. The pH of the stomached suspension was adjusted up to pH 7 if necessary. A 10-ml sample of supernatant was transferred to a 15-ml conical tube and serially diluted to obtain a 25-250 CFU/plate counting range. The samples were then plated out onto selective medium agar plates appropriate to the bacterium. XLD agar (Difco, VWR Scientific) was used for enumeration of *Salmonella* serotypes and MacConkey Sorbitol agar (Difco, VWR Scientific) was used for enumeration of the *E. coli* strains. All plates were incubated at 35°C for 24 hours, and formed colonies were counted.

The water controls were evaluated in the same manner as described above, except that 10 ml of deionized water was used instead of the sample formulation. To obtain the initial inoculum count, 10 g of bacteria-inoculated seeds and 10 ml of letheen broth were placed in a stomacher bag. The stomacher bag was placed inside a beaker in a shaker-water bath and agitated for the same length of time as the formulation treatments. At the end of the soaking period, the pH of the letheen broth-seed suspension was adjusted to 7.0 and the sample was handled in the same manner as the sample formula treatments. Each treatment, water control, and initial inoculum sample was replicated ten times and the data presented are averages of these replications.

**Oranges Laboratory Method:** Sample formulations were evaluated as antibacterial agents on inoculated oranges under laboratory conditions according to the following test method.

Bacteria culture preparation and oranges inoculation. Five-pound bags of oranges were obtained from retail grocers and individual oranges were measured for their diameter, cleaned, and inoculated with generic *E. coli* bacteria. The oranges were inoculated by immersing them in 2000 ml of an *E. coli* (ATCC 25922) broth for 15 minutes at room temperature. The *E. coli* broth was prepared by selecting a single *E. coli* colony from a tryptic soy agar (TSA, Difco Laboratories) plate and streaking the colony to another TSA plate. The freshly streaked TSA plate was incubated overnight at 35°C. The growth from the plate was collected using a sterile dacron swab and dispersed into 2000 ml of nutrient broth (Difco Laboratories). The nutrient broth was incubated overnight (20-24 hours) at 35°C. The inoculated oranges were dried for one hour before being treated with sample formulations. Some oranges were not treated with the formulations and were used to determine the inoculum level of *E. coli* on the fruit.

Evaluation of sample formulation. Two inoculated oranges were placed into a beaker containing a sample formulation that had been prepared from 1 part formulated concentrate (133.3 ml) plus 15 parts (2000 ml) of sterile water at a designated temperature (generally 22°C and 50°C). The oranges were soaked for 2 minutes and then transferred to a beaker containing 2000 ml of sterile water at the designated temperature for a 10-15 second rinse. The oranges were removed from the rinse water and placed in a sterile plastic bag along with 500 ml of chilled 0.1 % Peptone Water (Nutramax Products, Inc., Gloucester, MA). The plastic bag was placed inside another plastic bag and then placed on ice on a rotating shaker (150 oscillations per minute) for 1 hour. An aliquot (11 ml) was then pipetted into 99 ml of 0.1% Peptone Water and serial dilutions were made and plated onto Petrifilm™ E. coli Count Plates (3M Company, St. Paul, MN) (1 ml dilution/plate). Four replicates of each dilution were plated. All plates were incubated at 35°C for 24 ± 2 hours.

After incubation, the colonies were enumerated. On the Petrifilm™ E. coli Count Plates, blue colonies associated with gas bubbles are considered to be *E. coli* colonies. The raw counts (CFU/ml) for the four replicates were averaged for each sample formulation. The average area of the oranges was calculated from the average diameter and a conversion factor was determined by dividing the number of ml of diluent used in the treatment of the oranges (500 ml) by the average area of the two oranges treated. This conversion factor was used to convert the actual colony counts per ml obtained from the enumeration plates to colonies per cm² of the orange surface. Thus, the average CFU/ml for each sample formulation was multiplied by the conversion factor (ml/cm²) to obtain a count of CFU/cm² of orange. This count was converted to log base 10 and was subtracted from the initial inoculum level to indicate the bacterial log reduction.

The initial inoculum level on the oranges was determined by taking two of the inoculated and dried oranges and placing them in a sterile plastic bag with 500 ml of chilled 0.1% Peptone Water. The plastic bag was placed inside another plastic bag and then placed on ice on a rotating shaker (150 oscillations per minute) for 1 hour. This peptone solution was then sampled and diluted in the same manner as the treated oranges and plated onto Petrifilm™ E. coli Count Plates as described above. To obtain the initial inoculum level on the oranges, colonies were counted and the calculations were performed as described for the treated orange colony counts.

**Oranges Pilot Plant Method:** Sample formulations were evaluated as antibacterial agents on inoculated oranges under pilot plant conditions using commercial processing equipment according to the following test method. The pilot plant trials were conducted at the Citrus Research and Education Center (CREC) in Lake Alfred, Florida.

Oranges inoculation. Mature, medium-sized, field-picked oranges were cleaned and inoculated with generic *E. coli* bacteria by immersion in 20 liters of *E. coli* broth culture as described above in the Oranges Laboratory Method, except that a cocktail of *E. coli* (ATTC 25922, ATTC 35218, and ATTC 11229) was used. The oranges were then dried for one hour before being treated with sample formulations. Some oranges were not treated with the sample formulations and were used to determine the inoculum level of *E. coli* on the fruit.

Evaluation of sample formulation. Twenty inoculated oranges were placed into a tank containing a sample formulation (10 L) that had been prepared from 1 part formulated concentrate plus 15 parts of sterile water at a designated temperature (generally 22°C and 50°C). Preferably, the oranges were added within one hour of preparing the diluted formulation. The oranges were soaked for the prescribed time period (2 minutes) and then transferred to another tank containing 10 L of potable water at the designated temperature for a 10-15 second rinse. Six oranges were removed from the rinse water and placed in a sterile plastic bag along with one liter of chilled 0.1 % Peptone Water. The plastic bag was placed inside another plastic bag and then placed on ice on a rotating shaker (150 oscillations per minute) for 1 hour.

An alternative treatment was to spray the sample formulation from overhead sprayers onto oranges that had been placed on a conveyor system of brush rollers. The sample formulation was sprayed at a rate of 10 ml/second/orange onto six oranges for 5 seconds followed by 25 seconds of the oranges rotating on the brush rollers with no formulation being sprayed. This procedure was repeated four times for a total treatment time of 2 minutes. The oranges were then rinsed by overhead spraying of potable water for 10-15 seconds. Six oranges were placed in a sterile plastic bag with chilled Peptone Water and shaken as described for the above immersion procedure.

Sample aliquots from either the immersion procedure or the spray procedure were then analyzed for *E. coli* bacteria and bacterial log reduction calculated as described above for the Oranges Laboratory Method.

**Vegetable Method A:** Sample formulations were evaluated as antibacterial agents on a variety of vegetables having naturally occurring bacteria according to the following test method. Examples of vegetable types tested were cut carrots (prepackaged), leaf lettuce, green onions (leaf and bulb), and cut cabbage (prepackaged). All vegetables used in the Examples were obtained from a local retail food store. Leaf lettuce and green onions were chopped up into small pieces (about 0.3 to 0.6 cm in length) before running the evaluations.

The treatment procedure was as follows. Eleven grams of the chopped vegetable was placed in a 400-ml beaker along with 150 ml of the treatment solution (sample formulation or deionized water) and allowed to soak for 10 minutes at room temperature on a rotary shaker rotating at 100 rpm. Sample formulations were prepared from 1 part formulated concentrate plus 15 parts of sterile deionized water. The sample was then rinsed 5 times with sterile deionized water, transferred to a stomacher bag (Seward Limited, #400) containing 99 ml of Butterfield's Buffer (VWR Scientific), and stomached in a Seward stomacher for 2 minutes. The supernatant was removed and 1-ml aliquots were serially diluted (decimal) for enumeration of total aerobic counts (TAC), coliforms, and Gram-negative bacteria using the appropriate Petrifilm™ plates [Petrifilm™ Aerobic Count (AC) Plates for TAC, and Petrifilm™ E. coli Count Plates for *E. coli,* coliforms, and noncoliform Gram-negative bacteria] according to standard procedures. The data reported in the tables are averages of three replications.

**Vegetable Method B:** Sample formulations were evaluated as antibacterial agents on green onions (leaves and bulbs) having naturally occurring bacteria according to the following test method.

Green onion plant parts (leaves or bulbs) were chopped up into small (0.2-0.5 mm in length) pieces. A portion (10 g) of the chopped onion part was immersed at 23° C in 40 ml of sample formulation that had been prepared from 1 part formulated concentrate plus 1 parts of sterile water. The resulting suspension was shaken for 10 minutes at 100 rpm on a rotary shaker and drained on a sieve. The onion part was then placed in a stomacher 80 bag (Seward Limited) with 60 ml of letheen broth (90% letheen and 10% deionized water), the pH adjusted to 7.5 with aqueous sodium hydroxide solution, and the suspension stomached for 60 seconds. A sample from the stomacher was serially diluted and the bacteria present enumerated using Petrifilm™ AC Plates according to standard procedures. The results are reported as the average of three replications and sterile, deionized water was used as a negative control.

**Alfalfa Seeds/Native Bacteria Method:** Sample formulations were evaluated as antibacterial agents on alfalfa seeds having naturally occurring bacteria according to the Alfalfa Seeds/Inoculation Method described above, except that the seeds were not inoculated with bacteria, and the results reflect the kill of whatever native bacteria were present on the seeds. Seeds were treated at either 23°C or 44°C. The bacteria present were enumerated using Petrifilm™ AC Plates according to standard procedures. The results are reported as the average of four replications and sterile, deionized water was used as a negative control.

**Potato/Fungus Method** Sample formulations were evaluated as antifungal agents on potatoes inoculated with *Fusarium solani* as described above for the Oranges Laboratory Method, except for the following change. The inoculated potatoes used for determination of initial inoculum were soaked in 0.1 % Peptone Water for the same length of time (15 minutes) as for the sample treatments, and then aliquots of soaked solution were serially diluted and plated on appropriate agar. *Fusarium solani* was harvested and put into 1.5 L of 0.1 % Peptone Water for use in the soaking step. The fungi present were enumerated by pipetting 1.0-ml aliquots from the peptone soak bag and dispensing onto Potato Dextrose Agar Plates (Remel, Lenexa, KS). The plates were incubated according to standard procedures, except that four to seven days were required to obtain adequate growth of the fungi. The results are reported as the decimal Log reduction of the average of ten replications and sterile water was used as a control.

**Potato/Bacteria Method:** Sample formulations were evaluated as antibacterial agents on potatoes inoculated with *Erwinia carotovora* as described above for the Oranges Laboratory Method, except for the following procedural changes. The *Erwinia carotovora* inoculum was prepared 24 hours prior to sample formulation treatment by adding 0.25 ml *of Erwinia carotovora* (concentrated to 10⁸) to 100 ml of TSB medium. The resulting suspension was placed in an incubator for 24 hours at 37° C. The potatoes were inoculated by placing a 0.5-ml streak of the bacterial suspension on the flattest portion of each potato avoiding as many eyes as possible. The potatoes were allowed to dry for one hour before being treated with sample formulations or water. Following treatment and rinsing, three potatoes were placed in a sterile plastic bag along with 500 ml of 0.1% Peptone Water and placed on ice on a rotating shaker (150 oscillations/min) for one hour. The potatoes were then rubbed by hand through the single layer of the plastic bag and the bag was shaken vigorously for 45 seconds. A sample was taken from the bag and serially diluted with 0.1% Peptone Water. Samples were plated on TSA pour plates (0.1 ml dilution/plate), incubated, and the bacteria enumerated as previously described. The results are reported as the decimal Log reduction of the average of ten replications and sterile water was used as the control.

***In Vitro* Spores Method:** Formulation concentrates (undiluted) were evaluated in vitro against Bacillus subtilis spores (concentrated to about 10⁸ CFU/ml) at 50° C and at exposure times of 30, 45, and 60 minutes. Test samples were plated on TSA plates. The plates were incubated at 37° C for 48 hours and the colonies counted by standard procedures. The results are reported as the decimal Log reduction of the average of three replications.

### FORMULATIONS

The compositions of formulated concentrates used for antimicrobial evaluations on fruit, vegetable, or seeds are provided in Table 1 and Table 2. All concentrates were diluted with water (1 part concentrate plus 15 parts water, unless stated otherwise) prior to treatment of the target plant or plant part.

| **Table 1** | | | | | | | | | | | |
|---|---|---|---|---|---|---|---|---|---|---|---|
| **Component** | **Formulation Concentrate (% by Weight)** | | | | | | | | | | |
| | **11C** | ***15A*** | **37A** | **69B** | **73B** | **78A** | **78B** | **78F** | **78G** | **86A** | **95A** |
| PGMC8 | 20 | 14 | 14 | 14 | 20 | 14 | 14 | 14 | 14 | 14 | 14 |
| LA | 20 | 20 | - | 20 | 20 | 20 | 20 | 20 | 20 | 20 | 20 |
| PAT 122A | - | - | 8 | 8 | 8 | 8 | 8 | 8 | 8 | 8 | - |
| NaLSO₄ | - | 2 | 2 | 2 | 2 | 2 | 6 | - | 4 | 2 | 2 |
| SPAN 20 | - | 2 | 2 | - | - | 2 | - | 4 | - | - | 2 |
| PLUR P-65 | 10 | - | - | - | - | - | - | - | - | 2 | 8 |
| GEM SC40 | - | 8 | - | - | - | - | - | - | - | - | - |
| DOSS | 2 | - | - | - | - | - | - | - | - | - | - |
| PG | 48 | 54 | 74 | 56 | 50 | 54 | 52 | 54 | 54 | 54 | 54 |

| **Table 2** | | | | | | | | |
|---|---|---|---|---|---|---|---|---|
| **Component** | **Formulation Concentrate (% by Weight)** | | | | | | | |
| | **13B** | **13C** | **30D** | **42C** | **49A** | **73A** | **78C** | **78D** |
| PGMC10 | 1 | - | - | - | 20 | - | - | - |
| GML | - | 1 | 8 | 4 | - | 4 | - | - |
| LA | - | - | 20 | 10 | 20 | 20 | - | - |
| MA | 1 | 1 | - | 10 | | - | - | - |
| PAT 122A | - | - | 9.5 | 9.5 | 8 | 9 | - | - |
| NaLSO₄ | 2 | 2 | 0.5 | 0.5 | 2 | 1 | 6 | 2 |
| SPAN 20 | - | - | - | - | - | - | - | 2 |
| GEM SC40 | 5 | 5 | - | - | - | - | - | - |
| PG | - | - | 42 | 46 | 50 | - | - | - |
| Glycerin | - | - | - | - | - | 46 | - | - |
| Isopropanol | 15 | 15 | - | - | - | 20 | - | - |
| Ethanol | - | - | 20 | 20 | - | - | - | - |
| Water | 76 | 76 | - | - | - | - | 94 | 96 |

**EXAMPLE 1 - Evaluation of Sample Formulations on Inoculated Alfalfa** Seeds: Sample formulations were evaluated on bacteria-inoculated alfalfa seeds according to the Alfalfa Seeds/Inoculation Method described herein with the results provided in Table 3 (seeds inoculated with *E. coli*) and Table 4 (seeds inoculated with *Salmonella* Typhimurium). The *E. coli* was a mixture of four strains: ATCC 11229, ATCC 25922, ATCC 35218, and 97-1, a strain obtained from the Citrus Research and Education Center (CREC) in Lake Alfred, Florida. The *Salmonella* serotype used for all Runs was ser. Typhimurium, except Runs 21, 22, 23, and 24 where a cocktail of the following four serotypes was used: Typhimurium (ATCC 14029), Hartford (CDC HO657) Muenchen (ATCC 8388), and Mbandaka (ATTC 51958). It is noted that in Table 3 letheen broth containing 2% TWEEN™ 80 was utilized only for Runs 2, 3, and 4; and in Table 4 the letheen broth containing 2% TWEEN™ 80 was utilized for Runs 12-20 and for Runs 25, 26, and 27. For all other runs reported in Table 3 and Table 4, the standard letheen broth was used (0.5% Tween 80).

As described in the test methods, the sample formulations were generally evaluated as a 1-Part System, that is, 1 part of the formulated concentrate (generally containing fatty acid monoester, enhancer, surfactant, and vehicle components; See Tables 1 and 2) was diluted with 15 parts of water prior to treatment of the alfalfa seeds. This was true for all Runs of this Example (See Tables 3 and 4), except for Runs 8-10 and 24. For these latter four Runs, the sample formulations were evaluated as 2-Part Systems, that is, different components of the formulated concentrate (one container containing fatty acid monoester, surfactant, and vehicle components; and a separate container containing the enhancer component) were diluted with water just prior to treatment of the alfalfa seeds. Thus, for Runs 8-10 and 24, the sample formulation was prepared by adding 1 part formulated concentrate 37A, 0.2 parts LA, and 15 parts water just prior to seed treatment.

| **Table 3** | | | | | | |
|---|---|---|---|---|---|---|
| **Sample Formulations Evaluated on Alfalfa Seeds Inoculated with *E. coli*** **(1 Part Formulation Concentrate Diluted with 15 Parts Water)** | | | | | | |
| **Run** | **Formulation** | **Treatment Conditions** | | **Initial Bacteria Count** **(CFU/ml)** **(Decimal Log)** | **CFU Recovered** **(Decimal Log)** | **CFU** **Reduction** **(Decimal Log)** |
| **No.** | **Concentrate** | **Time (min)** | **Temp (°C)** | | | |
| 1 | 69B | 15 | 50 | 5.234 | 0.0 | 5.23 |
| 2 | 69B | 15 | 50 | 6.552 | 2.137 | 4.41 |
| 3 | 78A | 15 | 50 | 6.552 | 2.340 | 4.21 |
| 4 | 86A | 15 | 50 | 6.552 | 2.568 | 3.98 |
| 5 | 78A | 15 | 50 | 6.082 | 0.415 | 5.67 |
| 6 | 78A | 10 | 50 | 6.082 | 0.778 | 5.30 |
| 7 | 78A | 15 | 50 | 6.737 | 1.225 | 5.51 |
| 8 | 37A + LA* | 15 | 50 | 6.737 | 0 | 6.74 |
| 9 | 37A + LA* | 15 | 50 | 6.482 | 0.079 | 6.40 |
| 10 | 37A + LA* | 10 | 50 | 6.482 | 0 | 6.48 |

| | | | | | | |
|---|---|---|---|---|---|---|
| *Formulation 37A (1 Part) + LA (0.2 Parts) + Water (15 Parts) | | | | | | |

| **Table 4** | | | | | | |
|---|---|---|---|---|---|---|
| **Sample Formulations on Alfalfa Seeds Inoculated with *Salmonella* Typhimurium** **(1 Part Formulation Concentrate Diluted with 15 Parts Water)** | | | | | | |
| **Run** | **Formulation** | **Treatment Conditions** | | **Initial Bacteria Count** **(CFU/ml)** **(Decimal Log)** | **CFU** | **CFU** |
| **No.** | **Concentrate** | **Time (min)** | **Temp (°C)** | | **Recovered** **(Decimal Log)** | **Reduction** **(Decimal Log)** |
| 11 | 78A | 15 | 50 | 6.003 | 0.643 | 5.36 |
| 12 | 78A | 15 | 50 | 6.454 | 1.186 | 5.26 |
| 13 | 78A | 15 | 50 | 6.101 | 0.669 | 5.43 |
| 14 | 69B | 15 | 50 | 6.454 | 2.258 | 4.19 |
| 15 | 69B | 15 | 50 | 6.101 | 2.230 | 3.87 |
| 16 | 78F | 15 | 50 | 6.454 | 1.705 | 4.74 |
| 17 | 78G | 15 | 50 | 6.454 | 1.885 | 4.56 |
| 18 | 69B | 15 | 50 | 6.601 | 2.380 | 4.22 |
| 19 | 78A | 15 | 50 | 6.601 | 2.312 | 4.29 |
| 20 | 86A | 15 | 50 | 6.601 | 2.800 | 3.80 |
| 21 | 78A | 15 | 50 | 5.966 | 0.556 | 5.41 |
| 22 | 78A | 10 | 50 | 5.966 | 0.716 | 5.25 |
| 23 | 78A | 15 | 50 | 6.458 | 1.688 | 4.77 |
| 24 | 37A + LA* | 15 | 50 | 6.458 | 0 | 6.46 |
| 25 | 78C (Control) | 15 | 50 | 6.101 | 4.610 | 1.49 |
| 26 | 78D (Control) | 15 | 50 | 6.101 | 4.741 | 1.36 |
| 27 | Water Control | 15 | 50 | 6.454 | 5.762 | 0.69 |

| | | | | | | |
|---|---|---|---|---|---|---|
| *Formulation 37A (1 Part) + LA (0.2 Parts) + Water (15 Parts) | | | | | | |

The results from Tables 3 and 4 show that present invention formulations (containing fatty acid monoester, enhancer, surfactant, and vehicle components) all provided greater than 3-log reductions of both *E. coli* and *Salmonella* Typhimurium bacteria on inoculated alfalfa seeds. Some sample formulations provided greater than 4- or 5-log reductions under the conditions evaluated. In contrast, control formulations containing only surfactant and water components, e.g., from formulation concentrates 78C and 78D, provided much lower levels of bacteria control, i.e., less than 2-long reductions. It was also observed that sample formulations prepared just prior to seed treatment from separate components, e.g., from concentrate 37A (fatty acid monoester, surfactant, and vehicle components) plus lactic acid (LA), provided very high levels of bacteria control, in some cases, greater than 6-log reductions.

**EXAMPLE 2 Evaluation of Sample Formulations on Inoculated Oranges:** Sample formulations (from concentrates 73A and 73B) were evaluated on bacteria-inoculated oranges according to the Oranges Laboratory and Oranges Pilot Plant (PP) Methods described herein with the results provided in Table 5.

| **Table 5** | | | | | | |
|---|---|---|---|---|---|---|
| **Sample Formulations Evaluated on Oranges Inoculated with *E. coli*** **(1 Part Formulation Concentrate Diluted with 15 Parts Water)** | | | | | | |
| **Run** | **Formulation** | **Treatment Conditions** | | **Initial Bacteria Count** **(CFU/ml)** | **CFU** | **CFU** |
| **No.** | **Concentrate** | **Type** | **Temp** **(°C)** | | **Recovered** **(Decimal Log)** | **Reduction** **(Decimal Log)** |
| 1 | 73A | Laboratory | 50 | 4.0 x 10³ | 0 | 3.6 |
| 2 | 73B | Laboratory | 50 | 4.0 x 10³ | 0 | 3.6 |
| 3 | 73A | Laboratory | 22 | 1.5 x 10⁵ | 0 | 5.2 |
| 4 | 73A | Laboratory | 22 | 1.7 x 10⁵ | 0.8 | 5.1 |
| 5 | 73B | Laboratory | 22 | 5.1 x 10⁵ | 0.3 | 4.5 |
| 6 | 73A | PP/Spray | 50 | 4.6 x 10⁵ | 1.5 | 4.2 |
| 7 | 73B | PP/Spray | 50 | 2.4 x 10⁵ | 1.7 | 3.7 |
| 8 | 73A | PP/Immersion | 50 | 4.6 x 10⁵ | 0 | 5.7 |
| 9 | 73B | PP/Immersion | 50 | 2.4 x 10⁵ | 0 | 5.4 |
| 10 | 73A | PP/Immersion | 22 | 1.1 x 10⁵ | 2.4 | 2.6 |
| 11 | 73B | PP/Immersion | 22 | 1.1 x 10⁵ | 1.8 | 3.2 |

The results from Table 5 show that present invention formulations (containing fatty acid monoester, enhancer, surfactant, and vehicle components) generally provided greater than 3-log reductions of both *E. coli* bacteria on inoculated oranges under laboratory or pilot plant conditions. Some sample formulations provided greater than 4- or 5-log reductions under the conditions evaluated.

**EXAMPLE 3 - Evaluation of Sample Formulations on Vegetables and Alfalfa Seeds:** Sample formulations (from concentrates 11C, 30D and 42C) were evaluated on a variety of vegetables having naturally occurring bacteria according to Vegetable Method A described herein. Additionally, a sample formulation (from concentrate 49A) was evaluated on green onions and alfalfa seeds, both having naturally occurring bacteria, according to herein described Vegetable Method B and Alfalfa Seeds/Native Bacteria Method, respectively. The results are provided in Table 6 and show that the invention formulation samples provided good to excellent reduction of native bacteria (as measured by TAC, Gram-negative bacteria or coliforms) as compared to a water control for alfalfa seeds and a wide spectrum of different vegetable types.

| **Table 6** | | | | | | |
|---|---|---|---|---|---|---|
| **Sample Formulations Evaluated on Vegetables Having Natural Levels of Bacteria** **(1 Part Formulation Concentrate Diluted with 15 Parts Water)** | | | | | | |
| **Run** | **Formulation** | **Vegetable** | **Bacteria** | **Bacteria Recovered (CFU/ml)** | | **CFU** |
| **No.** | **Concentrate** | **Type** | **Type** | **Water Control** **(Decimal Log)** | **Sample** **(Decimal Log)** | **Reduction** **(Decimal Log)** |
| 1 | 30D | Cut Carrots | TAC | 6.112 | 2.214 | 3.9 |
| | | | Gram Neg. | 5.937 | 2.085 | 3.8 |
| | | | Coliforms | 5.168 | 1.959 | 3.2 |
| 2 | 11C | Cut Carrots | TAC | 6.156 | 2.531 | 3.6 |
| | | | Gram Neg. | 5.960 | 2.267 | 3.7 |
| | | | Coliforms | 4.959 | 1.176 | 3.8 |
| 3 | 11C | Leaf Lettuce | TAC | 6.337 | 3.618 | 2.7 |
| | | | Gram Neg. | 6.085 | 3.276 | 2.8 |
| | | | Coliforms | 3.084 | 0 | 3.1 |
| 4 | 42C | Green Onions | TAC | 6.683 | 3.686 | 3.0 |
| | | (Leaf) | Gram Neg. | 6.449 | 3.257 | 3.2 |
| | | | Coliforms | NT* | NT | NT |
| 5 | 42C | Green Onions | TAC | 6.407 | 4.993 | 1.4 |
| | | (Bulb) | Gram Neg. | 6.091 | 4.655 | 1.4 |
| | | | Coliforms | 3.920 | 2.254 | 1.7 |
| 6 | 11C | Cut Cabbage | TAC | 6.324 | 3.783 | 2.5 |
| | | | Gram Neg. | 6.199 | 3.611 | 2.6 |
| | | | Coliforms | 3.693 | 2.067 | 1.6 |
| 7 | 49A | Onions (Leaf) | TAC | 6.63 | 3.66 | 3.0 |
| 8 | 49A | Onions (Bulb) | TAC | 6.38 | 5.04 | 1.3 |
| 9 | 49A | Alfalfa Seeds (23° C) | TAC | 5.4 | 2.19 | 3.2 |
| 10 | 49A | Alfalfa Seeds (44° C) | TAC | 4.7 | 2.06 | 2.6 |

| | | | | | | |
|---|---|---|---|---|---|---|
| *Not Tested | | | | | | |

**EXAMPLE 4 - Evaluation of Sample Formulation against Fungus on Potatoes:** A sample formulation made from concentrate 15A was evaluated on potatoes inoculated with the fungus *Fusarium solani* according to the Potato/Fungus Method described herein. The results are provided in Table 7 and show that the invention formulation sample provided very good kill of the fungus as compared to the water control.

| **Table 7** | | | | | |
|---|---|---|---|---|---|
| **Sample Formulation Evaluated on Potatoes Inoculated with *F. solani*** **(1 Part Formulation Concentrate Diluted with 15 Parts Water)** | | | | | |
| **Run No.** | **Formulation Concentrate** | **Treatment Temperature** **(°C)** | **Initial Bacteria Count (CFU/ml)** **(Decimal Log)** | **CFU Recovered** **(Decimal Log)** | **CFU Reduction** **(Decimal Log)** |
| 1 | 15A | 23 | 2.32 | -0.02 | 2.3 |
| 2 | Water (Control) | 23 | 2.32 | 1.42 | 0.9 |
| 3 | 15A | 50 | 2.62 | 0.2 | 2.4 |
| 4 | Water (Control) | 50 | 2.62 | 1.37 | 1.2 |

EXAMPLE 5 - Evaluation of Sample Formulation against Bacteria on **Potatoes:** A sample formulation made from concentrate 15A (applied as a 2-Part System) was evaluated on potatoes inoculated with the bacteria *Erwinia carotovora* according to the Potato/Bacteria Method described herein. The sample formulation was prepared by adding 1 part formulated concentrate 15A (less the LA component), 0.2 parts LA, and 15 parts water just prior to treatment. The results are provided in Table 8 and show that the invention formulation sample provided excellent kill against *Erwinia carotovora* as compared to the water control.

| **Table 8** | | | | | |
|---|---|---|---|---|---|
| **Sample Formulation Evaluated on Potatoes Inoculated with *Erwinia carotovora*** | | | | | |
| **Run No.** | **Formulation Concentrate** | **Treatment Temperature** **(°C)** | **Initial Bacteria Count (CFU/ml)** **(Decimal Log)** | **CFU Recovered** **(Decimal Log)** | **CFU Reduction** **(Decimal Log)** |
| 1 | 15A (2-Part System) | 50 | 4.63 | 0.0 | 4.63 |
| 2 | Water (Control) | 50 | 4.63 | 2.72 | 1.91 |

**EXAMPLE 6 - Evaluation of Formulation Concentrates against *Bacillus Subtilis* Spores In Vitro:** Formulation concentrates 13B and 13C were evaluated in vitro against *Bacillus subtilis* spores at 50°C and at exposure times of 30, 45, and 60 minutes according to he In Vitro Spores Method described herein. The results are provided in Table 9 and show that the invention formulation concentrates provided very good kill of the spores with kill levels increasing with increasing time of exposure.

| **Table 9** | | | |
|---|---|---|---|
| **Formulation Concentrates Evaluated Against *Bacillus subtilis* Spores** **(Undiluted Concentrate)** | | | |
| **Run No.** | **Formulation Concentrate** | **Exposure Time** **(Minutes)** | ***Bacillus subtilis* Spores Reduction** **(Decimal Log)** |
| 1 | 13B | 30 | 2.16 |
| | | 45 | 4.30 |
| | | 60 | 5.11 |
| 2 | 13C | 30 | 2.23 |
| | | 45 | 4.50 |
| | | 60 | 5.21 |

### OTHER EMBODIMENTS

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. An antimicrobial formulation comprising:
a fatty acid monoester,
an enhancer comprising benzoic acid or salicylic acid,
two or more anionic surfactants, and
a vehicle.

2. The formulation of claim 1, wherein said fatty acid monoester is glycerol monalaurate, glycerol monocaprylate, glycerol monocaprate, propylene glycol monoburate, propylene glycol monocaprylate, propylene glycol monocaprate, or combinations thereof.

3. The formulation of claim 1, wherein the composition further comprises as an enhancer a chelating agent, an acid, or an alcohol.

4. The formulation of claim 3, wherein said chelating agent is EDTA or salts thereof.

5. The formulation of claim 3, wherein said enhancer is an organic acid,

6. The formulation of claim 5, wherein said organic acid is lactic, mandelic, succinic, tartaric, ascorbic, acetic, malic, or adipic acid.

7. The formulation of claim 3, wherein said alcohol is ethanol or isopropanol,

8. The formulation of claim 1, wherein said two or more anionic surfactants ure selected from the group consisting of acyl lactylate salts, dioctyl sulfosuccinate salts, lauryl sulfate salts, dodecylbenzene sulfonate salts, and salts of C8-C18 fully acids.

9. The formulation of claim 1, said formulation comprising two anionic surfactants.

10. The formulation of claim 1, wherein said vehicle is water, propylene glycol, polyethylene glycol, glycerin, ethanol, isopropanol, or combinations thereof

11. The formulation of claim 1, said formulation further comprising a flavorant.

## Patentansprüche

1. Antimikrobielle Formulierung, umfassend:
einen Fettsäuremonoester,
einen Verstärker, umfassend Benzoesäure oder Salicylsäure,
zwei oder mehr anionische grenzflächenaktive Mittel, und
einen Trägerstoff.

2. Formulierung gemäß Anspruch 1, wobei der Fettsäuremonoester Glycerinmonolaurat, Glycerinmonocaprylat, Glycerinmonocaprat, Propylenglykolmonolaurat, Propylenglykolmonocaprylat, Propylenglykolmonocaprat oder Kombinationen davon ist.

3. Formulierung gemäß Anspruch 1, wobei die Zusammensetzung ferner als Verstärker einen Chelatbildner, eine Säure oder einen Alkohol umfasst.

4. Formulierung gemäß Anspruch 3, wobei der Chelatbildner EDTA oder Salze davon ist.

5. Formulierung gemäß Anspruch 3, wobei der Verstärker eine organische Säure ist.

6. Formulierung gemäß Anspruch 5, wobei die organische Säure Milchsäure, Mandelsäure, Bernsteinsäure, Weinsäure, Ascorbinsäure, Essigsäure, Apfelsäure oder Adipinsäure ist.

7. Formulierung gemäß Anspruch 3, wobei der Alkohol Ethanol oder Isopropanol ist.

8. Formulierung gemäß Anspruch 1, wobei die zwei oder mehr anionischen grenzflächenaktiven Mittel ausgewählt sind aus der Gruppe, bestehend aus Acyllactylatsalzen, Dioctylsulfosuccinatsalzen, Laurylsulfatsalzen, Dodecylbenzolsulfonatsalzen und Salzen von C8-C18-Fettsäuren.

9. Formulierung gemäß Anspruch 1, wobei die Formulierung zwei anionische grenzflächenaktive Mittel umfasst.

10. Formulierung gemäß Anspruch 1, wobei der Trägerstoff Wasser, Propylenglykol, Polyethylenglykol, Glycerin, Ethanol, Isopropanol oder Kombinationen davon ist.

11. Formulierung gemäß Anspruch 1, wobei die Formulierung ferner einen Geschmacksstoff umfasst.

## Revendications

1. Formulation antimicrobienne comprenant :
un monoester d'acide gras,
un activateur comprenant l'acide benzoïque ou l'acide salicylique,
deux tensioactifs anioniques ou plus, et
un véhicule.

2. Formulation de la revendication 1, **caractérisée en ce que** ledit monoester d'acide gras est le monolaurate de glycérol, le monocaprylate de glycérol, le monocaprate de glycérol, le monolaurate de propylèneglycol, le monocaprylate de propylèneglycol, le monocaprate de propylèneglycol, ou une combinaison de ceux-ci.

3. Formulation de la revendication 1, **caractérisée en ce que** la composition comprend en outre en tant qu'activateur un agent chélateur, un acide ou un alcool.

4. Formulation de la revendication 3, **caractérisée en ce que** ledit agent chélateur est l'EDTA ou les sels de celui-ci.

5. Formulation de la revendication 3, **caractérisée en ce que** ledit activateur est un acide organique.

6. Formulation de la revendication 5, **caractérisée en ce que** ledit acide organique est l'acide lactique, mandélique, succinique, tartrique, ascorbique, acétique, malique ou adipique.

7. Formulation de la revendication 3, **caractérisée en ce que** ledit alcool est l'éthanol ou l'isopropanol.

8. Formulation de la revendication 1, **caractérisée en ce que** lesdits deux tensioactifs anioniques ou plus sont choisis dans le groupe constitué de sels d'acyllactylate, de sels de dioctylsulfosuccinate, de sels de laurylsulfate, de sels de dodécylbenzènesulfonate et de sels d'acides gras en C8-C18.

9. Formulation de la revendication 1, ladite formulation comprenant deux tensioactifs anioniques.

10. Formulation de la revendication 1, **caractérisée en ce que** ledit véhicule est l'eau, le propylèneglycol, le polyéthylèneglycol, la glycérine, l'éthanol, l'isopropanol, ou des combinaisons de ceux-ci.

11. Formulation de la revendication 1, ladite formulation comprenant en outre un aromatisant.
